# EUROPEAN PATENT APPLICATION

(11) **EP 4 821 996 A1**
(43) Date of publication of application: **14.10.2026**
(21) Application number: 24912397.7
(22) Date of filing: 12.12.2024
(51) Int. Cl.: C09J 5/00, B05D 7/14, C09J 201/00

(54) **STRUCTURAL ADHESIVE APPLICATION THICKNESS ADJUSTMENT METHOD, APPLICATION THICKNESS ADJUSTMENT JOINT MEMBER, AND APPLICATION THICKNESS ADJUSTMENT STRUCTURE**

(30) Priority: 25.12.2023 JP 2023218212
(71) Applicant: Cemedine Co., Ltd., Tokyo 141-8620 (JP)
(72) Inventor: KOTANI, Jun, Tokyo 141-8620 (JP)
(74) Representative: TBK
(86) International application number: PCT/JP2024/043959
(87) International publication number: WO 2025/142508

(57) **Abstract**

[Problem] To easily adjust an application thickness of a structural adhesive.

[Solution] A structural adhesive application thickness adjustment method includes: using a magnet as a spacer when bonding adherends to each other by a structural adhesive, in which at least one of the adherends is an adherend (A) having a property of being magnetically attached to the magnet.

## Description

### TECHNICAL FIELD

The present invention relates to a structural adhesive application thickness adjustment method. Particularly, the present invention relates to an on-site implementation method that has superiority in thickness adjustment at the time of applying a thick coating.

### BACKGROUND ART

A structural adhesive is defined in JIS K 6800 Adhesives and Adhesion Terminology, as "a reliable adhesive that can withstand a large load for a long period of time". Epoxy-based adhesives, acrylic-based adhesives, urethane-based adhesives, and the like are often used as the structural adhesives.

In recent years, such structural adhesives have been used in various fields. As the application fields of the structural adhesives expand, further improvements in performance have been demanded. When an adhesive is applied to an adherend, performance of the joined body can be improved by appropriately determining an application thickness and an application area of the adhesive. For example, Patent Literature 1 describes that when a column-beam steel-frame joint structure is formed using an adhesive, an application thickness of the adhesive is likely to vary especially in the on-site implementation, and controlling this thickness is crucial for feasibility of the joint.

Various methods have been proposed for properly controlling an application thickness of an adhesive. Patent Literature 2 proposes a method for using a steel plate as a spacer. However, this method requires welding work for fixing the spacer, and thus has problems in the workability and the implementation efficiency. Patent Literature 3 proposes a method for introducing an application device in order to control an application thickness in the implementation inside a factory. However, this method requires the large-scale equipment, and it is thus difficult to apply this method to a structure at a construction site or to an existing structure. Patent Literatures 4 and 5 propose methods in which glass beads, resin beads, or the like are mixed into an adhesive in advance. However, these methods do not allow a thickness other than a bead diameter to be adjusted at a work site, and cannot be applied to a thick coating.

Meanwhile, Patent Literature 6 proposes a method for installing a solar cell panel by using an adhesive together with a magnet that has been bonded to the panel by double-sided tape in advance. However, this method requires a step of fixing the magnet by the double-sided tape in advance, which is not only time-consuming but also causes a release liner of the double-sided tape to be generated as a waste.

Patent Literature 7 proposes a construction method for using an adhesive and a magnet in combination when an adherend is bonded to a base surface, thereby facilitating positional adjustment of the adherend before the adhesive cures. However, Patent Literature 7 discloses, as examples of the adhesive, only modified silicone resin adhesives and construction caulking materials, and does not disclose the structural adhesives.

### CITATION LIST

### PATENT LITERATURE

Patent Literature 1: Japanese Patent Application Laid-Open Publication No. 2016-216951
Patent Literature 2: Japanese Patent Application Laid-Open Publication No. 2015-124554
Patent Literature 3: Japanese Patent Application Laid-Open Publication No. 1995-000892
Patent Literature 4: WO 2019/230881
Patent Literature 5: Japanese Patent Application Laid-Open Publication No. 2019-194322
Patent Literature 6: Japanese Patent Application Laid-Open Publication No. 1994-085303
Patent Literature 7: Japanese Patent Application Laid-Open Publication No. 2015-174982

### SUMMARY OF INVENTION

### TECHNICAL PROBLEM

There is a need for a method for easily and inexpensively adjusting an application thickness of a structural adhesive at the time of applying the structural adhesive, particularly in a case of applying the adhesive to a structure at a construction site or to an existing structure. Particularly, there is a need for a method for adjusting the thickness at the time of applying the thick coating.

An object of the present invention is to provide a method for easily and inexpensively adjusting an application thickness of a structural adhesive.

### SOLUTION TO PROBLEM

As a result of conducting intensive studies to solve the above-described problem, the inventor found that an application thickness of a structural adhesive can be adjusted easily and inexpensively by using a magnet as a spacer in a case of bonding adherends to each other by a structural adhesive, in which at least one of the adherends is an adherend (A) having a property of being magnetically attached to the magnet. Thus, the inventor completed the present invention.

[Item 1] A structural adhesive application thickness adjustment method that includes: using a magnet as a spacer when bonding adherends to each other by a structural adhesive, in which at least one of the adherends is an adherend (A) having a property of being magnetically attached to the magnet.

[Item 2] The structural adhesive application thickness adjustment method according to Item 1, in which the magnet is a neodymium magnet.

[Item 3] The structural adhesive application thickness adjustment method according to Item 1 or 2, in which the adherend (A) having the property of being magnetically attached to the magnet is a steel material.

[Item 4] The structural adhesive application thickness adjustment method according to Item 1 or 2, in which the adherends are steel materials to be bonded to each other.

[Item 5] An application thickness adjustment joint member including the adherend (A) and the other adherend that are joined to each other by the structural adhesive application thickness adjustment method according to Item 1 or 2.

[Item 6] An application thickness adjustment structure that is constructed with an application thickness adjustment joint member (the body including the adherend (A) and the other adherend that are joined to each other by the structural adhesive application thickness adjustment method according to Item 1 or 2).

### ADVANTAGEOUS EFFECTS

According to the present invention, an application thickness of an adhesive can be adjusted easily and inexpensively without requiring any special apparatus or tool at the time of applying the adhesive, particularly in a case of applying the adhesive to a structure at a construction site or to an existing structure. The present method also allows the spacer to be installed easily not only on a horizontal surface but also on an inclined surface, a vertical surface, a ceiling surface, and the like.

### BRIEF DESCRIPTION OF DRAWINGS

FIG. 1(a) and FIG. 1(b) are illustrations for describing Example 1.
FIG. 2 is an illustration for describing Example 2.
FIG. 3 is an illustration for describing Example 4.
FIG. 4(a) and FIG. 4(b) are illustrations for describing Example 6.
FIG. 5(a) and FIG. 5(b) are illustrations for describing Example 7.
FIG. 6 is an illustration for describing Example 9.
FIG. 7 is an illustration for describing Example 12.

### DESCRIPTION OF EMBODIMENTS

The present invention provides a structural adhesive application thickness adjustment method that includes using a magnet as a spacer in a case of bonding adherends to each other by a structural adhesive, in which at least one of the adherends is an adherend (A) having a property of being magnetically attached to the magnet.

### <Adherend>

The adherend (A) that has the property of being magnetically attached to the magnet is not particularly limited as long as the adherend (A) is magnetically attached to the magnet used as the spacer. Examples of the adherend (A) include adherends made of iron, cobalt, nickel, and alloys containing these metals. A composite, a laminate, and a mixture that each include any of these metals as one constituent material can also be used as the adherend (A). Examples that can be cited as iron include carbon steel and alloy steel in addition to pure iron. These adherends may be coated or plated as long as the magnet can still be magnetically attached to the adherends.

Each of the adherends may be a plate-shaped material, a pipe-shaped material, or a rod-shaped material. Each of the adherends may have any of various cross-sectional shapes such as an H-shape, an I-shape, a mountain shape, and a groove shape.

The other adherend (B) to be bonded to the adherend (A) by the adhesive is not particularly limited as long as the adherend (B) can be bonded to the adherend (A) by the adhesive. Examples of the adherend (B) include adherends made of various materials including metals such as iron, aluminum, and stainless steel, resins, glass, concrete, mortar, ceramics, paper, cloth, fibers, and wood. A composite, a laminate, and a mixture that each include any of these materials as one constituent material can also be used as the adherend (B). Among the resins, composite plastics such as CFRP, GFRP, and FRP are preferred materials.

A combination of the adherends to be joined to each other is preferably a combination of steel and steel, steel and concrete, steel and wood, or steel and composite plastic, and is more preferably a combination of steel and steel.

### <Magnet Used as Spacer>

The magnet used as the spacer is not particularly limited as long as the magnet can be magnetically attached to at least one of the adherends without use of another tool or component. The magnet that can be used may be any of various magnets. Examples of the types of the magnet include a ferrite magnet, a neodymium magnet, a samarium-cobalt magnet, an alnico magnet, an iron-chromium-cobalt magnet, and a resin-bonded magnet that is obtained by solidifying and molding a powder of any of these magnets by using a binder. Among these, the ferrite magnet, the neodymium magnet, and the resin-bonded magnet are preferred because of being inexpensive and readily available, and the neodymium magnet or the resin-bonded magnet using the neodymium magnet powder as one constituent material is more preferred because of having strong magnetic force. Examples that can be used as the neodymium magnet include various magnets such as N35, N35H, N35SH, N40, N45, N48, N50, and N52.

A shape of the magnet is not particularly limited as long as the shape of the magnet can be used as a spacer. For example, the magnet may have a shape of a hexahedron such as a cube, a rectangular parallelepiped, or may have a shape of a flat plate. Alternatively, the magnet may have a shape of a circle such as a disk, a solid cylinder, or a doughnut. The magnet may have a shape of a hollow cylinder, a polygonal tube, a sphere, or a pyramid such as a triangular pyramid or a quadrangular pyramid. The magnet may have a curved section having a fan shape which is referred to as a segment shape. In addition, the magnet may have a shape of a flat plate or a disk in which a threaded hole or a countersunk hole is formed in a central portion of the flat plate or the disk. A plurality of the threaded holes or the countersunk holes may be provided in the magnet. Any of these magnets each provided with a projection may also be used. When the binder of the bonded magnet has flexibility, the magnet having a sheet shape, a cord shape, or a rod shape may be used, and any of such bonded magnets may also be cut into any desired shape, size, and length for use.

A thickness of the spacer may be determined in accordance with a desired thickness, and is preferably in a range from 0.1 mm to 50 mm, more preferably in a range from 0.2 mm to 20 mm, and still more preferably in a range from 0.3 mm to 5 mm. When a thickness of the spacer is smaller than 0.1 mm, handling the spacer is difficult, and an application thickness cannot be adequately adjusted. When a thickness of the spacer is larger than 50 mm, a large amount of adhesive is required, which is economically disadvantageous. The application thickness adjustment method according to the present invention is more effective when an application thickness of the adhesive is larger.

A size of the spacer may be determined in accordance with sizes and shapes of the members to be bonded to each other, and is preferably in a range from 0.01 mm² to 1,000,000 mm², and more preferably in a range from 1 mm² to 10,000 mm². When the size of the spacer is smaller than 0.01 mm², the spacer is fine so that handling the spacer is difficult. When the size of the spacer is larger than 1,000,000 mm², the spacer is excessively heavy so that handling the spacer is difficult, and such a size is also economically disadvantageous.

The magnet that can be used as the spacer may be magnetized in any direction, including a vertical direction and a horizontal direction, and may be magnetized so as to have two poles on a one-side surface. However, the magnet is preferably manufactured in an economically advantageous manner.

The magnet as the spacer may be used in combination with a resin material or a metal material. The disk-shaped magnet covered with a plastic material such that only a bottom magnetic surface of the magnet is exposed is widely used as a household magnet, and such a magnet may also be used as the spacer. The magnet having the similar structure covered with an iron material is preferable since the magnetic force can be enhanced. A projection may be formed on the resin material or metal material combined with the magnet, and such a magnet may be used to function both as a slip-prevention member and as the spacer when the sheet-shaped adhesive is provided on a vertical surface.

A member other than a magnet can be combined with the plate-shaped or disk-shaped magnet including the hole, the threaded hole, or the countersunk hole formed in the central portion of the magnet. For example, a screw may be combined into the threaded hole so that the projection may be formed on the spacer, and the thus-combined magnet may be used to function both as a slip-prevention member and as the spacer when the sheet-shaped adhesive is provided on a vertical surface.

A surface of the magnet used as the spacer may be surface-treated as long as the function of the magnet as the spacer is not impaired. For example, since magnets are relatively susceptible to impact and tend to crack, a protective layer may be formed on the magnet by coating or plating with a resin or a metal. Such surface treatment may also impart an anti-corrosion function to the magnet.

A pressure-sensitive adhesive layer may be formed on a one-side surface or both-side surfaces that are included in the magnet used as the spacer and that are brought into contact with the adherend, thereby imparting a temporary fixing function. Providing the pressure-sensitive adhesive layer enables the spacer to be installed on the adherend that does not have the property of being magnetically attached to the magnet.

### <Structural Adhesive>

The structural adhesive used in the present invention is not particularly limited, and any general structural adhesive may be used. Examples of the structural adhesive include an epoxy-based adhesive, a urethane-based adhesive, and an acrylic-based adhesive. These structural adhesives have high bonding strength and are suitable for joining steel materials to each other. Among these, the adhesives enabling the adhesive joint portion to follow a large displacement, i.e., the adhesives having toughness, are preferred.

Since the structural adhesive is "an adhesive that can withstand a large load for a long period of time", the structural adhesive needs to have a tensile shear adhesive strength that is equal to or larger than 5 N/mm², preferably equal to or larger than 10 N/mm², more preferably equal to or larger than 15 N/mm², and still more preferably equal to or larger than 20 N/mm².

Further, in the fields of construction and civil engineering where heating at a work site is difficult, the adhesive that rapidly cures at a room temperature (25°C ± 5°C) is preferred. More preferably, the adhesive develops a bonding strength equal to or larger than 80% of its ultimate strength within 24 hours at a room temperature (25°C ± 5°C).

### <Thickness Adjustment Method>

The structural adhesive application thickness adjustment method according to the present invention may be any method as long as a desired adhesive thickness can be secured. For example, the magnet serving as the spacer may be attached to the one adherend (A) having the property of being magnetically attached to the magnet, and the adhesive may be further applied to the adherend (A) so that the other adherend (B) is bonded to the adherend (A). Alternatively, the adhesive may be applied to the adherend (B) so that the adherend (B) is bonded to the adherend (A) to which the magnet serving as the spacer has been attached. Depending on a type and a use manner of the adhesive, the adhesive may be applied to both of the adherends (A) and (B). A pressure-sensitive adhesive may be applied to one surface of the magnet serving as the spacer, or a pressure-sensitive adhesive tape may be attached to the one surface of the magnet, and thereby, the magnet may be fixed to the adherend (B).

After the adherends are bonded to each other, temporary fixation may be performed by any of various methods such as placing a weight thereon, or using a clip, a pressure-sensitive adhesive tape, a vise, a bolt, or welding, until the adhesive cures and develops the sufficient strength. The magnet serving as the spacer is used for adjusting an application thickness of the adhesive. In this regard, the temporary fixation may be omitted in a case where the adherend (B) has the property of being magnetically attached to the magnet, separation at the joined portion does not occur even without the temporary fixation by additional means, and the sufficient adhesive strength can be obtained after curing of the adhesive.

Concerning arrangement of the magnet serving as the spacer, the number and installation positions of the magnets are not particularly limited as long as the adhesive layer is uniformly applied at a thickness defined by the spacers. The arrangement may be appropriately determined depending on a size, a shape, and magnetic force of the magnet and sizes, shapes, and rigidity of the adherends. However, when the magnets are arranged within the same plane, the magnets preferably have the same height. Since the purpose is to uniformly apply the adhesive at a constant thickness within the bonded surface, when the number of the installed magnets is only one, the magnet is preferably arranged at the center of the bonded surface, and preferably has as large an area as possible. Preferably, a plurality of the magnets are provided. In this case, the magnets are preferably arranged at an edge portion of the region to which the adhesive is applied. However, when the rigidity of the adherends is low and a portion thereof without the magnet is bent so that the required application thickness cannot be maintained, the spacer needs to be provided also at the bent portion.

### <Use>

The application thickness adjustment method according to the present invention can easily and inexpensively adjust the thickness, and thus, can be used in various fields, including electrical and electronic fields, and fields of automobiles, aircraft, ships, motorcycles, electric trains, machinery, buildings, civil engineering structures, office supplies, and daily goods. Particularly, the method is suitably applicable to a structure at a construction site and an existing structure, where there is often a need to adjust the application thickness easily and inexpensively at the time of on-site work. The method can be applied to a case of bonding, to each other, the adherends, for example, a combination of: a steel material and a steel material; a steel material and one of aluminum and stainless steel; a steel material and CFRP; a steel material and concrete; or a steel material and one of wood, a laminated material, and laminated timber. Examples of this case include, but are not limited to, a case of bonding a reinforcing member to a steel material to improve the rigidity or strength, a case of joining a reinforcing steel plate to concrete or wood, a case of installing a seismic brace to a column member or a beam member, and a case of bonding a repair plate to a structure such as a steel bridge or a concrete bridge.

### [Member]

Various joined members formed using the structural adhesive application thickness adjustment method according to the present invention can be provided. Further, structures including such joined members can also be provided.

### EXAMPLES

The following is a more detailed description using Examples, with reference to the drawings. These Examples are illustrative and should not be interpreted as limiting the present invention.

### [Structural Adhesives Used in Examples]

- Adhesive A: Metal Lock Y612 BLACK (manufactured by Cemedine Co., Ltd.; two-component acrylic structural adhesive)
- Adhesive B: Scotch Weld Metal Grip (manufactured by 3M Japan Limited; two-component acrylic structural adhesive)
- Adhesive C: Bolt Lock 1 (manufactured by Denka Company Limited; two-component acrylic adhesive for steel sheets)
- Adhesive D: Scotch Weld DP460 (manufactured by 3M Japan Limited; two-component epoxy structural adhesive)
- Adhesive E: Scotch Weld DP6330NS (manufactured by 3M Japan Limited; two-component urethane structural adhesive)

### [Adherends Used in Examples]

### (Adherend (A) Having Property of Being Magnetically Attached to Magnet)

- Adherend a: SPCC (ordinary steel, cold-rolled steel sheet), 1.6 mm thick × 25 mm × 100 mm
- Adherend b: SS400 (carbon steel, general structural rolled steel), 3.2 mm thick × 25 mm × 100 mm
- Adherend c: SS400, 4.5 mm thick × 25 mm × 100 mm
- Adherend d: SS400, 4.5 mm thick × 40 mm × 150 mm
- Adherend e: SS400, 12.0 mm thick × 25 mm × 100 mm
- Adherend i: hot-dip galvanized steel sheet (SGHC F12), 1.6 mm thick × 25 mm × 100 mm
- Adherend j: melamine-coated steel sheet, 1.6 mm thick × 25 mm × 100 mm

### (Adherend Not Magnetically Attached to Magnet)

- Adherend f: SUS304, 1.5 mm thick × 25 mm × 100 mm
- Adherend g: CFRP (matrix: epoxy resin), 3.0 mm thick × 25 mm × 100 mm
- Adherend h: aluminum (A1100P), 2 mm thick × 25 mm × 100 mm

### [Magnets Used in Examples]

- Magnet 1: magnetic sheet with pressure-sensitive adhesive, 0.8 mm thick × 10 mm × 20 mm
- Magnet 2: magnetic sheet, 0.6 mm thick × 15 mm × 60 mm
- Magnet 3: cylindrical neodymium magnet, 1 mm thick × 2 mm diameter
- Magnet 4: cuboid neodymium magnet, 3 mm thick × 6 mm × 12 mm
- Magnet 5: disk-shaped neodymium magnet, 0.3 mm thick × 10 mm diameter
- Magnet 6: disk-shaped neodymium magnet, 0.5 mm thick × 4 mm diameter
- Magnet 7: cuboid neodymium magnet, 3 mm thick × 3 mm × 18 mm
- Magnet 8: cuboid neodymium magnet, 1 mm thick × 5 mm × 20 mm
- Magnet 9: cuboid neodymium magnet, 2 mm thick × 5 mm × 25 mm
- Magnet 10: cuboid neodymium magnet, 3 mm thick × 5 mm × 25 mm

### [Example 1]

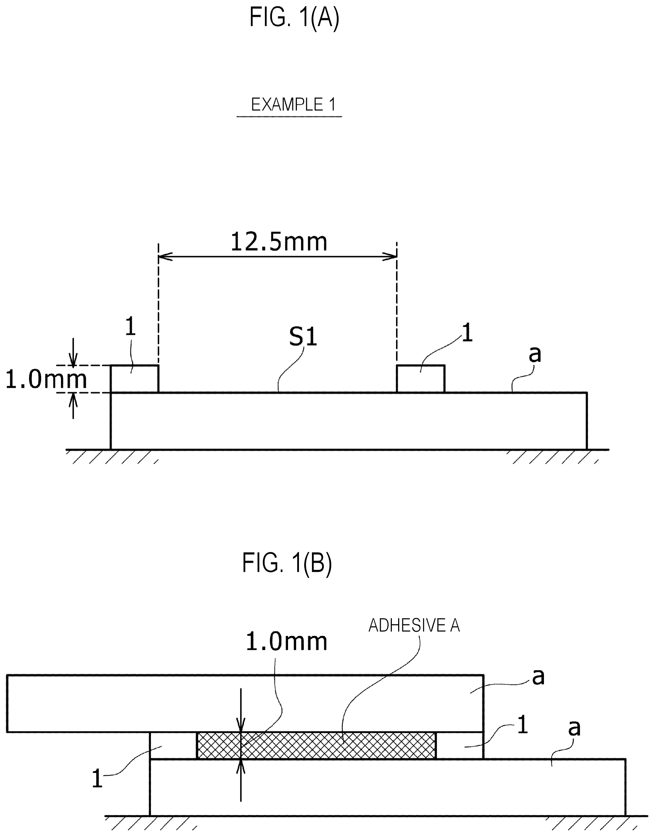

Example 1 is described with reference to FIG. 1(a) and FIG. 1(b).

The adherend a was used as the adherend (A). An area S1 (25 mm × 12.5 mm) to which the adhesive was to be applied was subjected to sandblasting treatment, and then cleaned with a solvent. The thus-treated area S1 constitutes a bonded surface. The two magnets 1 serving as the spacers were arranged on the bonded surface so as to sandwich the area S1 to which the adhesive was to be applied (refer to FIG. 1(a)). At this time, the release paper attached to the magnets 1 was not removed, and the magnets 1 were arranged such that the magnetic surfaces faced to a side of the adherend a. Since the installed spacers are attached to the adherend a by the magnetic force, the spacers could be easily installed and did not readily detach from the adherend a. The adherend a was placed on a table such that the bonded surface faced upward, and the adhesive A was mixed and applied to the application area S1. Then, another adherend a serving as the other adherend (B) was bonded to the former adherend a. Thereby, the joined body was produced. An application thickness of the cured adhesive was measured two days later and found to be 1.0 mm. This thickness was equivalent to the thickness (1.0 mm) of a combination of the magnet and the release paper, indicating that the application thickness had been controlled as intended (refer to FIG. 1(b)).

### [Example 2]

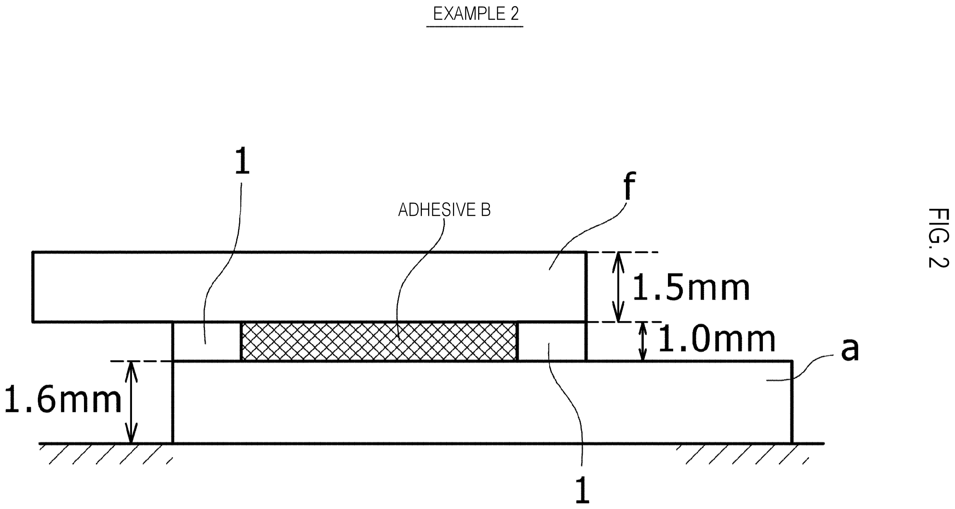

Example 2 is described with reference to FIG. 2.

The joined body was produced in the same manner as that in Example 1, except that the adherend f was used as the other adherend (B) to be bonded by the adhesive, and the adhesive B was used as the adhesive. The spacers could be easily installed and did not readily detach from the adherend. After the adherend (B) was bonded, the temporary fixation was performed using two binder clips. One day later, the binder clips were removed, and an application thickness of the cured adhesive was measured and found to be 1.0 mm. This thickness was equivalent to the thickness (1.0 mm) of a combination of the magnet and the release paper, indicating that the application thickness had been controlled as intended.

### [Example 3]

The joined body was produced in the same manner as that in Example 2, except that the adherend g was used as the other adherend (B) to be bonded by the adhesive. The spacers could be easily installed and did not readily detach from the adherend. One day later, the binder clips were removed, and an application thickness of the cured adhesive was measured and found to be 0.9 mm. This thickness was substantially equivalent to the thickness (1.0 mm) of a combination of the magnet and the release paper, indicating that the application thickness had been controlled as intended.

### [Example 4]

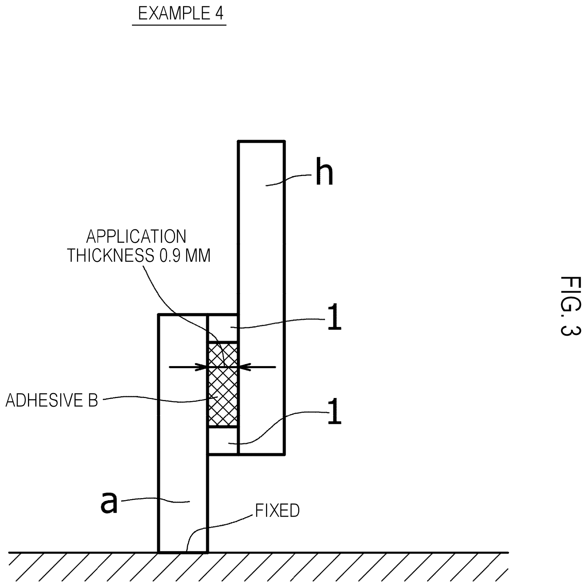

Example 4 is described with reference to FIG. 3.

The joined body was produced in the same manner as that in Example 2, except that the adherend h was used as the other adherend (B) to be bonded by the adhesive, and the adherend was made to stand vertically in the bonding implementation. The spacers could be easily installed even on the vertical surface, and neither slipped down nor detached. One day later, the binder clips were removed, and an application thickness of the cured adhesive was measured and found to be 0.9 mm. This thickness was substantially equivalent to the thickness (1.0 mm) of a combination of the magnet and the release paper, indicating that the application thickness had been controlled as intended.

### [Example 5]

The joined body was produced in the same manner as that in Example 1, except that the adherends d were used as the adherends (A) and (B), the bonded area (40 mm × 50 mm) was used as the bonded surface with the mill scale remaining thereon without being subjected to sandblasting treatment, the two magnets 2 were used as the spacers, and the adhesive B was used as the adhesive. The spacers could be easily installed and did not readily detach from the adherend. After the adherend (B) was bonded, the temporary fixation was performed using a vise. One day later, the vise was removed, and an application thickness of the cured adhesive was measured and found to be 0.5 mm. This thickness was substantially equivalent to the thickness (0.6 mm) of the magnet, indicating that the application thickness had been controlled as intended.

### [Example 6]

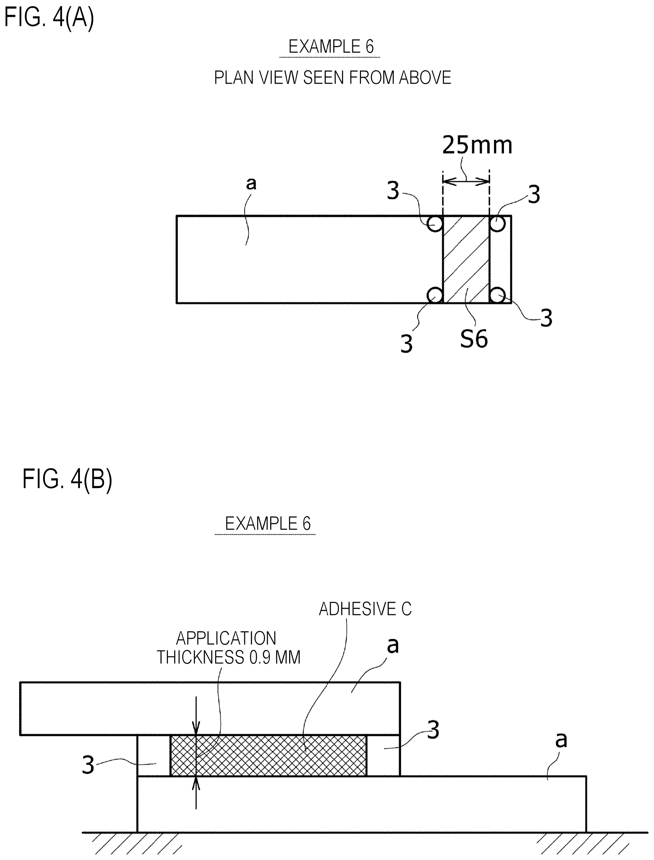

Example 6 is described with reference to FIG. 4(a) and FIG. 4(b).

The joined body was produced in the same manner as that in Example 1, except that the four magnets 3 serving as the spacers were arranged at four corners of the bonded area S6 (refer to FIG. 4(a)), and the adhesive C was used as the adhesive. The spacers could be easily installed and did not readily detach from the adherend. One day later, an application thickness of the cured adhesive was measured and found to be 0.9 mm (refer to FIG. 4(b)). This thickness was substantially equivalent to the thickness (1.0 mm) of the magnet, indicating that the application thickness had been controlled as intended.

### [Example 7]

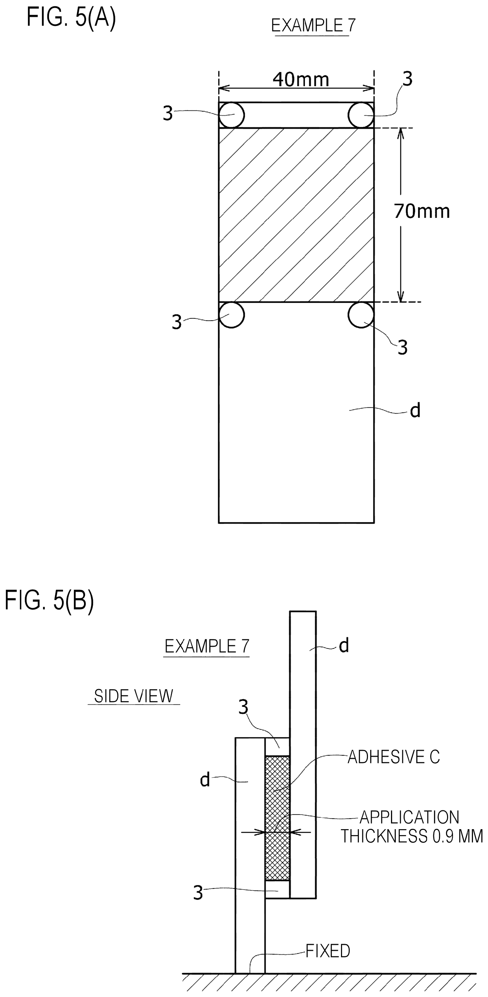

Example 7 is described with reference to FIG. 5(a) and FIG. 5(b).

The joined body was produced in the same manner as that in Example 6, except that the adherends d were used as the adherends (A) and (B), the bonded area was set to 40 mm × 70 mm, and the adherend was made to stand vertically in the bonding implementation. The spacers could be easily installed even on the vertical surface, and neither slipped down nor detached. One day later, the binder clips were removed, and an application thickness of the cured adhesive was measured and found to be 0.9 mm. This thickness was substantially equivalent to the thickness (1.0 mm) of the magnet, indicating that the application thickness had been controlled as intended.

### [Example 8]

The joined body was produced in the same manner as that in Example 1, except that the adherends d were used as the adherends (A) and (B), the bonded area was set to 40 mm × 60 mm, the two magnets 4 were used as the spacers, and the adhesive C was used as the adhesive. The spacers could be easily installed and did not readily detach from the adherend. Two days later, an application thickness of the cured adhesive was measured and found to be 3.0 mm. This thickness was equivalent to the thickness (3.0 mm) of the magnet, indicating that the application thickness had been controlled as intended.

### [Example 9]

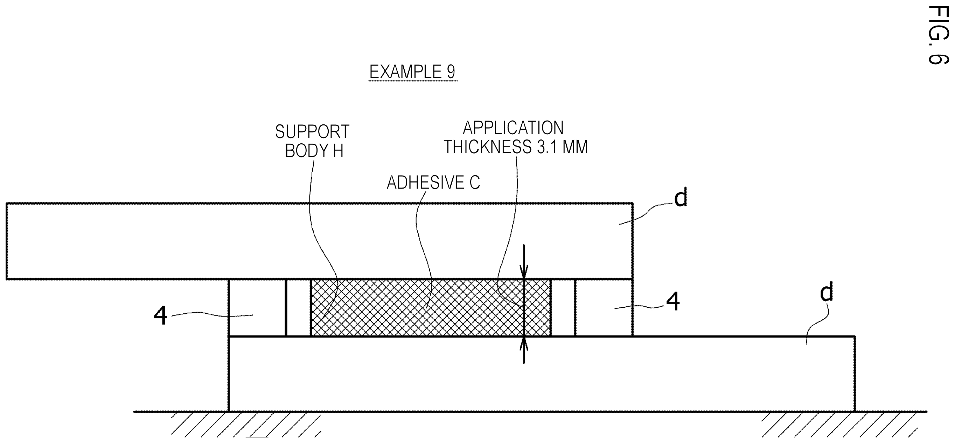

Example 9 is described with reference to FIG. 6.

The joined body was produced in the same manner as that in Example 8, except that, when the adhesive was applied, a support body H (10 mm thick × 35 mm × 50 mm) having a three-dimensional knitted structure was arranged in the bonded area, and the adhesive was applied so as to be injected into and impregnated into the support body H. The spacers could be easily installed and did not readily detach from the adherend. Two days later, an application thickness of the cured adhesive was measured and found to be 3.1 mm. This thickness was substantially equivalent to the thickness (3.0 mm) of the magnet, indicating that the application thickness had been controlled as intended.

### [Example 10]

The joined body was produced in the same manner as that in Example 1, except that the surface-polished adherends e were used as the adherends (A) and (B), the two magnets 4 were used as the spacers, and the adhesive D was used as the adhesive. The spacers could be easily installed and did not readily detach from the adherend. Two days later, an application thickness of the cured adhesive was measured and found to be 3.1 mm. This thickness was substantially equivalent to the thickness (3.0 mm) of the magnet, indicating that the application thickness had been controlled as intended.

### [Example 11]

The joined body was produced in the same manner as that in Example 10, except that the adherend was made to stand vertically in the bonding implementation. The spacers could be easily installed even on the vertical surface, and neither slipped down nor detached. Two days later, an application thickness of the cured adhesive was measured and found to be 3.1 mm. This thickness was substantially equivalent to the thickness (3.0 mm) of the magnet, indicating that the application thickness had been controlled as intended.

### [Example 12]

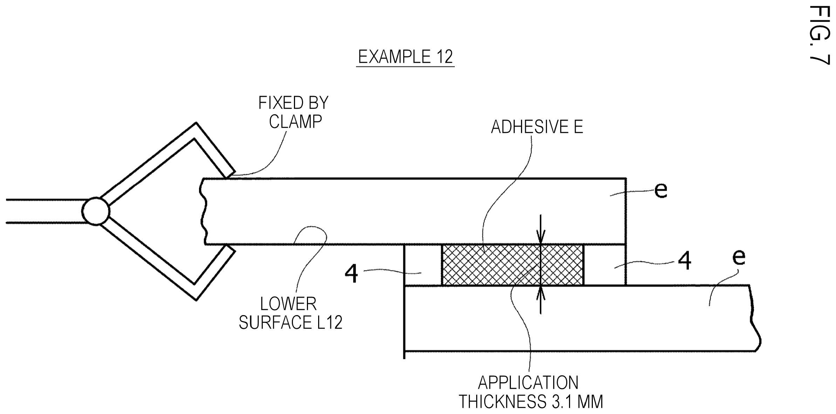

Example 12 is described with reference to FIG. 7.

The joined body was produced in the same manner as that in Example 10, except that the adhesive E was used as the adhesive, the adherend (A) was fixed in the air by a clamp, and the adhesive was applied to a lower surface L12 (assumed as a ceiling surface). The spacers were fixed to the lower surface L12, and neither fell nor detached. Two days later, an application thickness of the cured adhesive was measured and found to be 3.1 mm. This thickness was substantially equivalent to the thickness (3.0 mm) of the magnet, indicating that the application thickness had been controlled as intended.

### [Example 13]

The joined body was produced in the same manner as that in Example 1, except that the adherends b were used as the adherends (A) and (B), the two magnets 6 were used as the spacers, and the adhesive E was used as the adhesive. The spacers could be easily installed and did not readily detach from the adherend. One day later, an application thickness of the cured adhesive was measured and found to be 0.5 mm. This thickness was equivalent to the thickness (0.5 mm) of the magnet, indicating that the application thickness had been controlled as intended.

### [Example 14]

The joined body was produced in the same manner as that in Example 1, except that the adherends b were used as the adherends (A) and (B), the two magnets 7 were used as the spacers, the adhesive E was used as the adhesive, and the adherend was made to stand vertically in the bonding implementation. The spacers could be easily installed even on the vertical surface, and neither slipped down nor detached. One day later, an application thickness of the cured adhesive was measured and found to be 3.1 mm. This thickness was substantially equivalent to the thickness (3.0 mm) of the magnet, indicating that the application thickness had been controlled as intended.

### [Example 15]

The joined body was produced in the same manner as that in Example 1, except that the adherend b was used as the adherend (A), the adherend i was used as the other adherend (B), the two magnets 8 were used as the spacers, and the adhesive E was used as the adhesive. The spacers could be easily installed and did not readily detach from the adherend. One day later, an application thickness of the cured adhesive was measured and found to be 1.0 mm. This thickness was equivalent to the thickness (1.0 mm) of the magnet, indicating that the application thickness had been controlled as intended.

### [Example 16]

The joined body was produced in the same manner as that in Example 15, except that the adherend j was used as the other adherend (B), and the two magnets 9 were used as the spacers. The spacers could be easily installed and did not readily detach from the adherend. One day later, an application thickness of the cured adhesive was measured and found to be 2.0 mm. This thickness was equivalent to the thickness (2.0 mm) of the magnet, indicating that the application thickness had been controlled as intended.

### [Example 17]

The joined body was produced in the same manner as that in Example 1, except that the adherends b were used as the adherends (A) and (B), the bonded area (25 mm × 25 mm) was used as the bonded surface with the mill scale remaining thereon without being subjected to sandblasting treatment, and a combination of the magnet 9 and the magnet 10 stacked on each other was used as the spacer so that the application thickness was adjusted to 5 mm. The spacers could be easily installed even on the vertical surface, and neither slipped down nor detached. One day later, an application thickness of the cured adhesive was measured and found to be 5.0 mm. This thickness was equivalent to the thickness (5.0 mm) of the magnets, indicating that the application thickness had been controlled as intended.

### [Example 18]

The joined body was produced in the same manner as that in Example 17, except that the adherend (A) was fixed in the air by a clamp, and the adhesive was applied to a lower surface (assumed as a ceiling surface). The spacers and the adherend were fixed to each other by the magnetic force, and neither fell nor detached. One day later, an application thickness of the cured adhesive was measured and found to be 5.0 mm. This thickness was equivalent to the thickness (5.0 mm) of the magnets, indicating that the application thickness had been controlled as intended.

### [Example 19]

The joined body was produced in the same manner as that in Example 17, except that the adhesive A was used as the adhesive, a combination of the two magnets 8 stacked on each other was used as the spacer so that the application thickness was adjusted to 2 mm, and the adherend was placed on a table with the bonded surface facing upward in the bonding implementation. The spacers could be easily installed and did not readily detach from the adherend. One day later, an application thickness of the cured adhesive was measured and found to be 2.0 mm. This thickness was equivalent to the thickness (2.0 mm) of the magnets, indicating that the application thickness had been controlled as intended.

From Examples described above, it can be understood that, when adherends at least one of which is the adherend (A) having the property of being magnetically attached to a magnet are bonded to each other by a structural adhesive, the magnet is used as a spacer so that the spacer can be easily installed without necessity of an additional means for temporarily fixing the spacer, and an application thickness of the adhesive can be accurately controlled by the spacer. The spacer can be easily installed not only on a horizontal surface but also on a vertical surface, a ceiling surface, and the like, without necessity of an additional means for temporarily fixing the spacer. Further, the ease of stacking and fixing the spacers enables surface unevenness to be easily addressed at a work site.

## Claims

1. A structural adhesive application thickness adjustment method comprising: using a magnet as a spacer when bonding adherends to each other by a structural adhesive, wherein at least one of the adherends is an adherend (A) having a property of being magnetically attached to the magnet.

2. The structural adhesive application thickness adjustment method according to claim 1, wherein the magnet is a neodymium magnet.

3. The structural adhesive application thickness adjustment method according to claim 1 or 2, wherein the adherend (A) having the property of being magnetically attached to the magnet is a steel material.

4. The structural adhesive application thickness adjustment method according to claim 1 or 2, wherein the adherends are steel materials to be bonded to each other.

5. An application thickness adjustment joint member comprising the adherend (A) and the other adherend that are joined to each other by the structural adhesive application thickness adjustment method according to claim 1 or 2.

6. An application thickness adjustment structure that is constructed with an application thickness adjustment joint member, wherein
the application thickness adjustment joint member includes the adherend (A) and the other adherend that are joined to each other by the structural adhesive application thickness adjustment method according to claim 1 or 2.
